# FASCICULE DE BREVET EUROPEEN

(11) **EP 1 066 208 B1**
(45) Date de publication et mention de la délivrance du brevet: **27.11.2002**
(21) Numéro de dépôt: 00900627.1
(22) Date de dépôt: 20.01.2000
(51) Int. Cl.: B65G 17/08

(54) **ELEMENTS DE CONVOYEURS EN POLYAMIDE GLISSANT SUR DES ELEMENTS EN POLYACETAL ET/OU VICE-VERSA**
FÖRDERELEMENTE AUS POLYAMID, DIE AUF ELEMENTEN AUS POLYACETAL GLEITEN, UND/ODER VICE-VERSA
POLYAMIDE CONVEYOR ELEMENTS SLIDING ON POLYACETAL ELEMENTS AND/OR VICE-VERSA

(30) Priorité: 22.01.1999 FR 9900719
(43) Date de publication de la demande: 10.01.2001
(73) Titulaire: Atofina, 92800 Puteaux (FR)
(72) Inventeur: ALEX, Patrick, F-91470 Limours-Pecqueuse (FR); KNUDSEN, Chirstian, Capion, DK-4720 Praesto (DK); ROSENKRANDS, Niels, Peter, DK-2100 Copenhague (DK)
(74) Mandataire: Neel, Henry
(86) Numéro de dépôt international: FR0000125
(87) Numéro de publication internationale: WO00043298

(56) Documents cités:
- EP-A- 0 284 379
- DE-A- 2 045 899
- DE-A- 4 236 461
- GB-A- 2 183 263
- US-A- 4 391 951
- US-A- 5 683 818

## Description

La présente invention concerne des convoyeurs ayant des élements en polyamide et plus particulièrement (i) des profilés fixes tels que des glissières et des rails et (ii) des pièces mobiles telles que des maillons de chaîne qui forment tout ou partie des éléments mobiles du convoyeur, ces éléments frottant sur des élements en polyacetals et/ou vice versa.

La présente invention est particulièrement utile pour les convoyeurs à chaîne. Par exemple des maillons de longueur 1 à 5 cm, largeur 1 à 2 cm et d'épaisseur 1 à 2 cm sont assemblés pour former une bande transporteuse sans fin. On peut disposer par exemple 1 à 10 maillons en largeur pour former une bande de 1 à 20 cm de large et plusieurs centaines de maillons dans le sens de la longueur selon la longueur de la bande sans fin. Les maillons sont attachés entre eux mais sont articulés, ainsi ils présentent une mobilité relative pour que la bande transporteuse qu'ils forment puisse tourner, monter ou descendre. La partie fixe est constituée de rails, de glissières de plaques sur lesquels glissent les maillons de la chaîne.

Un système d'entraînement constitué d'un rouleau ou d'une roue dentée et entraînée par un moteur, fait avancer la bande transporteuse formée de tous les maillons. les maillons situés à l'extérieur de la bande peuvent être munis de crochets ou être de forme différente des autres parce qu'ils sont souvent utilisés pour le guidage de la bande, il y a glissement de ces maillons sur des parties fixes du convoyeur. Ces maillons situés à l'intérieur de la bande peuvent glisser sur une plaque ou sur des profilés. Habituellement les maillons sont obtenus par moulage de polymères et les parties fixes du convoyeur sont en acier inox.

Les maillons s'usent par le frottement avec l'inox. Des parties fixes métalliques du convoyeur peuvent être recouvertes d'une pièce d'usure en polyéthylène. Généralement les maillons sont en polyacétal (polyoxyméthylène). Les polyacétals sont décrits dans ULLMANN'S ENCYCLOPEDIA of INDUSTRIAL CHEMISTRY 5° edition (1992) vol. A 21 p. 591-603.

Des exemples de convoyeurs à chaînes sont décrits dans les brevets US 5749454, US 5031757, US 5497874, US 5584373 et US 5690210.

L'art antérieur a décrit dans US 5683818 des mélanges de polyamide 6-6 et de polypropylène devant résister au frottement sur une surface métallique non lubrifiée. Ces mélanges comprennent aussi un polypropylène maléisé comme agent compatibilisant et éventuellement de la poudre de polytetrafluorethylene comme lubrifiant. US 5504139 décrit des mélanges de PA 6-6, de polyéthylène haute densité et d'un éthylène propylène maléisé comme agent compatibilisant. Ces mélanges sont présentés comme devant résister au frottement.

JP 63314256 A décrit des mélanges de polyamide et d'un copolymère de l'éthylène, d'un ester d'acide carboxylique insaturé et dé l'anhydride maléique. Il est écrit que ces mélanges résistent au frottement.

EP 234819 décrit des mélanges similaires à l'art antérieur précédent et ils sont présentés comme résistant à l'abrasion.

EP 284379 décrit des mélanges constitués d'une matrice de polyamide dans laquelle sont dispersés des nodules d'un copolymère éthylène-(méth)acrylate d'akyle-anhydride maléique dans lesquels sont dispersés des nodules de polyamide. Ces mélanges sont aussi présentés comme devant résister à l'abrasion.

US 4391951 décrit des mélanges de polyamide 6 (au moins 50 %), de polytetrafluorethylene (PTFE), de polyéthylène de très haute masse molaire et d'un polyester élastomère. Cette composition est supposée allonger la durée de vie du polyamide 6 quand il est soumis au frottement.

Tous ces produits résistent plus ou moins bien.

La présente invention concerne des convoyeurs comprenant au moins un élément mobile d'un mélange (A) à base de polyamide glissent sur un élément fixe en polyacétal et/ou comprenant au moins un élément mobile constitué de polyacétal glissant sur un élément fixe constitué d'un mélange (A) à base de polyamide.

La demanderesse a trouvé que des éléments de convoyeurs constitués de mélanges particuliers de polyamide présentaient une exceptionnelle résistance à l'usure quand ils glissaient sur des éléments fixes en polyacétal et vice versa.

S'agissant du mélange (A), il est à matrice polyamide et contient des nodules de polyoléfine.

On entend par polyamide les produits de condensation :
- d'un ou plusieurs aminoacides, tels les acides aminocaproïques, amino-7-heptanoïque, amino-11-undécanoïque et amino-12-dodécanoïque d'un ou plusieurs lactames tels que caprolactame, oenantholactame et lauryllactame ;
- d'un ou plusieurs sels ou mélanges de diamines telles l'hexaméthylènediamine, la dodécaméthylènediamine, la métaxylyènediamine, le bis-p aminocyclohexylméthane et la triméthylhexaméthylène diamine avec des diacides tels que les acides isophtalique, téréphtalique, adipique, azélaïque, subérique, sébacique et dodécanedicarboxylique ;
ou des mélanges de certains monomères ce qui conduit à des copolyamides.

On peut utiliser des mélanges de polyamide. On utilise avantageusement le PA-6 et le PA-6,6.

On entend par polyoléfines des polymères comprenant des motifs oléfines tels que par exemple des motifs éthylène, propylène, butène-1, etc...

A titre d'exemple, on peut citer :
- le polyéthylène, le polypropylène, les copolymères de l'éthylène avec des alphaoléfines. Ces produits pouvant être greffés par des anhydrides d'acides carboxyliques insaturés tels que l'anhydride maléique ou des époxydes insaturés tels que le méthacrylate de glycidyle.
- les copolymères de l'éthylène avec au moins un produit choisi parmi (i) les acides carboxyliques insaturés, leurs sels, leurs esters, (ii) les esters vinyliques d'acides carboxyliques saturés, (iii) les acides dicarboxyliques insaturés, leurs sels, leurs esters, leurs hemiesters, leurs anhydrides (iv) les époxydes insaturés.

Ces copolymères de l'éthylène pouvant être greffés par des anhydrides d'acides dicarboxyliques insaturés ou des époxydes insaturés.
- les copolymères blocs styrène / éthylène-butène / styrène (SEBS) éventuellement maléisés.

On peut utiliser des mélanges de deux ou plusieurs de ces polyoléfines.

On utilise avantageusement :
- le polyéthylène,
- les copolymères de l'éthylène et d'une alpha-oléfine,
- les copolymères de l'éthylène / d'un (méth)acrylate d'alkyle,
- les copolymères de l'éthylène / d'un (méth)acrylate d'alkyle / de l'anhydride maléique, l'anhydride maléique étant greffé ou copolymérisé,
- les copolymères de l'éthylène / d'un (méth)acrylate d'alkyle / du méthacrylate de glycidyle, le méthacrylate de glycidyle étant greffé ou copolymérisé,
- le polypropylène.

Il est recommandé, pour faciliter la formation de la matrice de polyamide, et si les polyoléfines ont peu ou pas de fonctions pouvant faciliter la compatibilisation, d'ajouter un agent compatibilisant.

L'agent compatibilisant est un produit connu en soi pour compatibiliser les polyamides et les polyoléfines.

On peut citer par exemple :
- le polyéthylène, le polypropylène, les copolymères éthylène propylène, les copolymères éthylène-butène, tous ces produits étant greffés par de l'anhydride maléique ou du méthacrylate de glycidyle.
- les copolymères éthylène / (méth)acrylate d'alkyle / anhydride maléique, l'anhydride maléique étant greffé ou copolymérisé,
- les copolymères éthylène / acétate de vinyle / anhydride maléique, l'anhydride maléique étant greffé ou copolymérisé.
- les deux copolymères précédents dans lesquels l'anhydride maléique est remplacé par le méthacrylate de glycidyle,
- les copolymères éthylène / acide (méth)acrylique éventuellement leurs sels,
- le polyéthylène, le propylène ou les copolymères éthylène propylène, ces polymères étant greffés par un produit présentant un site réactif avec les amines ; ces copolymères greffés étant ensuite condensés avec des polyamides ou des oligomères de polyamides ayant une seule extrémité amine.

Ces produits sont décrits dans EP 342 066.

La quantité de polyamide formant la matrice peut être comprise entre 55 et 95 parties pour 5 à 45 parties de polyoléfines.

La quantité de compatibilisant est la quantité suffisante pour que la polyoléfine se disperse sous forme de nodules dans la matrice polyamide. Elle peut représenter jusqu'à 20 % du poids de la polyoléfine. On fabrique ces polymères par mélange de polyamide, de polyoléfine et éventuellement de compatibilisant selon les techniques usuelles de mélange à l'état fondu (bi vis, Buss, monovis).

Avantageusement, le MFI du polyamide est compris entre 2 et 30 (235°C-2,16 kg).

Avantageusement la viscosité de la phase dispersée (la polyoléfine) est supérieure à celle de la matrice.

Avantageusement le rapport des viscosités de la polyoléfine au polyamide mesuré à une vitesse de cisaillement de 600 s-¹ est supérieur à 0,7 et de préférence compris entre 0,75 et 2.

Selon une première forme de l'invention la polyoléfine est un polyéthylène haute densité (HDPE) et l'agent compatibilisant est un polymère (C) lui-même comprenant un mélange d'un polyéthylène (C1) et d'un polymère (C2) choisi parmi les élastomères, les polyéthylènes de très basse densité et les copolymères de l'éthylène, le mélange (C1) + (C2) étant cogreffé par un acide carboxylique insaturé.

Selon une deuxième forme de l'invention la polyoléfine est du polypropylène et l'agent compatibilisant est un polymère (C) résultant de la réaction d'un copolymère (C1) du propylène et d'un monomère insaturé X, greffé ou copolymérisé, avec un polyamide C2.

S'agissant de la première forme les proportions dans (A) sont avantageusement les suivantes (en poids) :
55 à 70 % de polyamide, de préférence du PA-6
5 à 15 % de compatibilisant
le complément en polyéthylène haute densité.

De préférence le MFI est entre 2 et 10 (235°C - 2,16 kg).

On décrit maintenant le compatibilisant de cette première forme de l'invention. Le polyéthylène (C1) peut être choisi parmi les polyéthylènes cités plus haut.

Avantageusement (C1) est un polyéthylène haute densité (HDPE) de densité comprise entre 940 à 965.

Le MFI de (C1) est (sous 2,16 kg - 190°C) entre 0,1 et 3.

Le copolymère (C2) peut être par exemple un élastomère éthylène /propylène (EPR) ou éthylène / propylène / diène (EPDM).

(C2) peut être aussi un polyéthylène de très basse densité (VLPDE) qui est soit un homopolymère de l'éthylène, soit un copolymère de l'éthylène et d'une alpha oléfine.

(C2) peut aussi être un copolymère de l'éthylène avec au moins un produit choisi parmi (i) les acides carboxyliques insaturés, leurs sels, leurs esters, (ii) les esters vinyliques d'acides carboxyliques saturés (iii) les acides dicarboxyliques insaturés, leurs sels, leurs esters, leurs hemiesters, leurs anhydrides.

Avantageusement (C2) est un EPR.

Avantageusement on utilise 60 à 95 parties de (C1) pour 40 à 5 parties de (C2).

Le mélange de (C1) et (C2) est greffé avec un acide carboxylique insaturé c'est-à-dire (C1) et (C2) sont cogreffés. On ne sortirait pas du cadre de l'invention en utilisant un dérivé fonctionnel de cet acide.

Des exemples d'acide carboxylique insaturés sont ceux ayant 2 à 20 atomes de carbone tels que les acides acrylique, méthacrylique, maléique, fumarique et itaconique. Les dérivés fonctionnels de ces acides comprennent par exemple les anhydrides, les dérivés esters, les dérivés amides, les dérivés imides et les sels métalliques (tels que les sels de métaux alcalins) des acides carboxyliques insaturés.

Des acides dicarboxyliques insaturés ayant 4 à 10 atomes de carbone et leurs dérivés fonctionnels, particulièrement leurs anhydrides, sont des monomères de greffage particulièrement préférés.

Ces monomères de greffage comprennent par exemple les acides maléique, fumarique, itaconique, citraconique, allylsuccinique, cyclohex-4-ène-1,2-dicarboxylique, 4-méthyl-cyclohex-4-ène-1,2-dicarboxylique, bicyclo(2,2,1)-hept-5-ène-2,3-dicarboxylique, x-méthylbicyclo(2,2,1)-hept-5-ène-2,3-dicarboxylique, les anhydrides maléique, itaconique, citraconique, allylsuccinique, cyclohex-4-ène-1,2-dicarboxylique, 4-méthylènecyclohex-4-ène-1,2-dicarboxylique, bicyclo(2,2,1)hept-5-ène-2,3-dicarboxylique, et x-méthylbicyclo(2,2,1)hept-5-ène-2,2-dicarboxylique. On utilise avantageusement l'anhydride maléique.

Divers procédés connus peuvent être utilisés pour greffer un monomère de greffage sur le mélange de (C1) et (C2).

Par exemple, ceci peut être réalisé en chauffant les polymères (C1) et (C2) à température élevée, environ 150° à environ 300°C, en présence ou en l'absence d'un solvant avec ou sans initiateur de radicaux.

Dans le mélange de (C1) et (C2) modifié par greffage obtenu de la façon susmentionnée, la quantité du monomère de greffage peut être choisie d'une façon appropriée mais elle est de préférence de 0,01 à 10 %, mieux de 600 ppm à 2 % par rapport au poids de (C1) et (C2) greffés.

La quantité du monomère greffé est déterminée par dosage des fonctions succiniques par spectroscopie IRTF.

Le MFI de (C) c'est-à-dire de (C1) et (C2) ayant été cogreffés est de 5 à 30 (190°C - 2,16 kg) de préférence 13 à 20.

Selon une forme particulière de l'invention le polymère (C), c'est-à-dire (C1) et (C2) cogreffés, est tel que le rapport MFI₁₀ / MFI₂ est supérieur à 18,5, MFI₁₀ désignant l'indice d'écoulement à 190°C sous une charge de 10 kg et MFI₂ l'indice sous une charge de 2,16 kg.

Avantageusement le MFI₂₀ du mélange (C) des polymères (C1) et (C2) cogreffés est inférieur à 24. MFI₂₀ désigne l'indice d'écoulement à 190°C sous une charge de 21,6 kg.

S'agissant de la deuxième forme de l'invention les proportions du mélange (A) sont avantageusement les suivantes (en poids) :
60 à 70 % de polyamide, de préférence du PA-6 ou du PA-6,6
20 à 30 % de polypropylène
3 à 10 % de compatibilisant.

De préférence le MFI est entre 2 et 10 (235°C - 2,16 kg).

Le MFI du polypropylène est avantageusement inférieur à 0,5 (230°C - 2,16 kg) et de préférence compris entre 0,1 et 0,5.

De tels produits sont décrits dans EP 647681.

On décrit maintenant le compatibilisant de cette deuxième forme de l'invention.

On commence par préparer (C1) qui est soit un copolymère du propylène et d'un monomère insaturé X, soit un polypropylène sur lequel on greffe un monomère insaturé X. X est tout monomère insaturé pouvant être copolymérisé avec le propylène ou greffé sur le polypropylène et possédant une fonction pouvant réagir avec un polyamide. Cette fonction peut être un acide carboxylique, un anhydride d'acide dicarboxylique, un epoxyde.....

A titre d'exemple de monomère X on peut citer l'acide (méth)acrylique, l'anhydride maléfique,..... les epoxydes insaturés tels que le (méth)acrylate de glycidyle. On utilise avantageusement l'anhydride maléique. S'agissant des polypropylènes greffés on peut greffer X sur des polypropylènes homo ou copolymères, tels que des copolymères éthylène propylène majoritaires en propylène (en moles). Le greffage est une opération connue en soi.

(C2) est un polyamide ou un oligomère de polyamide. Des oligomères de polyamide sont décrits dans EP 342066 et FR 2291225.

Les polyamides (ou oligomères) C2 sont les produits de condensation des monomères déjà cités plus haut.

On peut utiliser des mélanges de polyamides. On utilise avantageusement le PA-6, le PA-11, le PA 12, le copolyamide à motifs 6 et motifs 12 (PA-6/12), et le copolyamide à base de caprolactame, hexaméthylènediamine et acide adipique (PA-6/6.6).

Les polyamides ou oligomères C2 peuvent être à terminaisons acides, amine ou monoamine. Pour que le polyamide ait une terminaison monoamine il suffit d'utiliser un limiteur de chaîne de formule 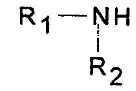 dans laquelle:
R₁ est l'hydrogène ou un groupement alkyle linéaire ou ramifié contenant jusqu'à 20 atomes de carbone,
R₂ est un groupement ayant jusqu'à 20 atomes de carbone alkyle ou alcenyle linéraire ou ramifié, un radical cycloaliphatique saturé ou non, un radical aromatique ou une combinaison des précédents. Le limiteur peut être par exemple la laurylamine ou l'oleylamine.

Avantageusement C2 est un PA-6, un PA-11 ou un PA-12.

La proportion de C2 dans C1 + C2 en poids est avantageusement comprise entre 0,1 et 60 %.

La réaction de (C1) avec (C2) s'effectue de préférence à l'état fondu. On peut par exemple malaxer (C1) et (C2) dans une extrudeuse à une température généralement comprise entre 230 et 250°C. Le temps de séjour moyen de la matière fondue dans l'extrudeuse peut être compris entre 10 secondes et 3 minutes et de préférence entre 1 et 2 minutes.

Les mélanges (A) de l'invention peuvent être préparés par mélange à l'état fondu dans des extrudeuses (mono ou bi vis), des malaxeurs BUSS, des mélangeurs BRABENDER et en général les dispositifs habituels de mélange des thermoplastiques.

### Exemples

Un convoyeur à chaîne constitué d'une section de 0,7 m de large et 3,35 m de long constituée d'une plaque en acier inoxydable et d'une autre section semblable de 0,7 m de large et 2,10 m de long disposées à plat et à angle droit reliées par une section formant un quart de couronne de rayon intérieur 0,95 m et rayon extérieur (0,7 + 0,95)m.

Les maillons de 7 cm de large sont disposés par 10 en largeur formant une bande transporteuse de 0,7 m de large et de longueur : deux fois la longueur du convoyeur.

Les maillons sont articulés et de forme telle que la bande peut tourner à angle droit entre les deux sections droites. La bande formée de tous ces maillons est entraînée par un moteur et une roue dentée située à l'extrémité du convoyeur du côté de la section de 2,10 m. Les maillons extérieurs sont garnis de crochets et guident la bande pour qu'elle reste sur la plaque formant le support du convoyeur. Dans la section coudée sur la partie extérieure (celle de grand rayon) la plaque en inox est recouverte soit d'un profilé en polyéthylène de haute masse molaire (ex. 1 comparatif) soit d'un mélange (A) conforme à la première forme de l'invention et constitué de :
65 % de PA-6 de MFI 6 (2,35°C - 2,16 kg)
10 % d'un mélange de PEHD et d'EPR en proportions 75/25 greffé par 0,2 % (en poids) d'anhydride maléique.
25 % de polyéthylène haute densité MFI 2 (235°C - 2,16 kg).

Dans ce coude extérieur se développent les plus grandes valeurs de frottement.

Les maillons sont en polyacétal.

On a mesuré la vitesse de la roue dentée d'entraînement, la force de traction (en livres) sur la bande transporteuse et la température à la surface de contact des maillons et du profilé qui recouvre la partie extérieure de la section coudée.

Les résultats sont sur le tableau 1 suivant.

On voit que pour le profilé en polyéthylène de haute masse molaire (UHMW) l'effort de traction de la bande à maillons en polyacétal à 100 tr/minute est le même que pour environ une vitesse entre 300 et 333 tours/minute pour un profilé constitué du mélange (A).

| Vitesse Tours/minute | profilé en polyéthylène UHWM | | profilé en mélange (A) | |
|---|---|---|---|---|
| | effort en Ib | température °C | effort en Ib | température °C |
| 33 | 116 | 34 | 108 | 25 |
| 66 | 159 | 45 | 120 | 29 |
| 100 | 170 | 51* | 120 | 32 |
| 133 | | | 141 | 36 |
| 166 | | | 149 | 40 |
| 200 | | | 153 | 43 |
| 233 | | | 151 | 41,5 |
| 266 | | | 145 | 43 |
| 300 | | | 165 | 56 |
| 333 | | | 179 | 56 |

| | | | | |
|---|---|---|---|---|
| * rupture du profilé en polyéthylène UHWM | | | | |

## Revendications

1. Convoyeurs comprenant des éléments mobiles glissant sur des éléments fixes comprenant au moins un élément mobile constitué d'un mélange (A) à base de polyamide glissant sur un élément fixe en polyacétal et/ou comprenant au moins un élément mobile constitué de polyacétal glissant sur un élément fixe constitué d'un mélange (A) à base de polyamide.

2. Convoyeurs selon la revendication 1 dans lesquels le mélange (A) est à matrice polyamide et contient des nodules de polyoléfine.

3. Convoyeurs selon la revendication 1 ou 2 dans lesquels le mélange (A) comprend (en poids) :
55 à 70 % de polyamide, de préférence du PA-6
5 à 15 % de compatibilisant
le complément en polyéthylène haute densité.

4. Convoyeurs selon la revendication 3 dans lesquels le compatibilisant est un mélange d'un polyéthylène haute densité (C1) et d'un polymère (C2) choisi parmi les élastomères, les polyéthylènes de très basse densité et les copolymères de l'éthylène, le mélange C1 + C2 étant cogreffé par un acide carboxylique insaturé.

5. Convoyeurs selon la revendication 1 ou 2 dans lesquels le mélange (A) comprend :
60 à 70 % de polyamide, de préférence du PA-6 ou du PA-6.6
20 à 30 % de polypropylène
3 à 10 % de compatibilisant.

6. Convoyeurs selon la revendication 5 dans lesquels le compatibilisant est un polymère (C) résultant de la réaction d'un copolymère (C1) du propylène et d'un monomère insaturé X (greffé ou copolymérisé) avec un polyamide (C2).

## Claims

1. Conveyors comprising moving elements which slide over fixed elements comprising at least one moving element made of a polyamide-based blend (A) which slides over a fixed element made of polyacetal and/or comprising at least one moving element made of polyacetal which slides over a fixed element made of a polyamide-based blend (A).

2. Conveyors according to Claim 1, in which the blend (A) has a polyamide matrix and contains polyolefin nodules.

3. Conveyors according to Claim 1 or 2, in which the blend (A) comprises (by weight)
55 to 70% of polyamide, preferably PA-6,
5 to 15% of compatibilizer,
the balance being high-density polyethylene.

4. Conveyors according to Claim 3, in which the compatibilizer is a blend of a high-density polyethylene (C1) and a polymer (C2) chosen from elastomers, very-low-density polyethylenes and ethylene copolymers, the C1 + C2 blend being cografted by an unsaturated carboxylic acid.

5. Conveyors according to Claim 1 or 2, in which the blend (A) comprises:
60 to 70% of polyamide, preferably PA-6 or PA-6,6,
20 to 30% of polypropylene,
3 to 10% of compatibilizer.

6. Conveyors according to Claim 5, in which the compatibilizer is a polymer (C) resulting from the reaction of a copolymer (C1) of propylene and of an unsaturated monomer X (the monomer being grafted or copolymerized) with a polyamide (C2).

## Patentansprüche

1. Förderer, die bewegliche Elemente enthalten, die auf fest montierten Elementen gleiten, und die mindestens ein bewegliches Element, das aus einem Gemisch (A) auf der Basis von Polyamid besteht und das auf einem fest montierten Element aus Polyacetal gleitet, und/oder mindestens ein bewegliches Element aufweisen, das aus Polyacetal besteht und das auf einem fest montierten Element gleitet, das aus einem Gemisch (A) auf Polyamidbasis besteht.

2. Förderer nach Anspruch 1, wobei das Gemisch (A) eine Polyamidmatrix aufweist und knollenförmige Nester aus Polyolefin enthält.

3. Förderer nach Anspruch 1 oder 2, wobei das Gemisch (A) (in Gewichtsprozent) enthält:
55 bis 70 % Polyamid und vorzugsweise PA-6, und
5 bis 15 % Kompatibilisierungsmittel,
wobei der Rest aus Polyethylen mit hoher Dichte besteht.

4. Förderer nach Anspruch 3, wobei das Kompatibilisierungsmittel ein Gemisch aus einem Polyethylen mit hoher Dichte (C1) und einem Polymer (C2) ist, das unter den Elastomeren, den Polyethylenen mit sehr geringer Dichte und den Copolymeren von Ethylen ausgewählt ist, wobei das Gemisch (C1) + (C2) mit einer ungesättigten Carbonsäure cogepfropft ist.

5. Förderer nach Anspruch 1 oder 2, wobei das Gemisch (A) (in Gewichtsprozent) enthält:
60 bis 70 % Polyamid und vorzugsweise PA-6 oder PA-6,6,
20 bis 30 % Polypropylen, und
3 bis 10 % Kompatibilisierungsmittel.

6. Förderer nach Anspruch 5, wobei das Kompatibilisierungsmittel ein Polymer (C) ist, das bei der Umsetzung eines Copolymers (C1) von Propylen und eines (gepfropften oder copolymerisierten) Monomers X mit einem Polyamid (C2) entsteht.
